# FASCICULE DE BREVET EUROPEEN

(11) **EP 0 614 332 B1**
(45) Date de publication et mention de la délivrance du brevet: **16.10.1996**
(21) Numéro de dépôt: 93901798.4
(22) Date de dépôt: 27.11.1992
(51) Int. Cl.: A01G 23/095, A63B 27/00

(54) **MACHINE POUR FACONNER UN ARBRE SUR PIED**
BAUMENTASTUNGSMASCHINE FÜR STEHENDE BÄUME
MACHINE FOR PRUNING STANDING TREES

(30) Priorité: 27.11.1991 FR 9114866; 30.06.1992 FR 9208279
(43) Date de publication de la demande: 14.09.1994
(73) Titulaire: PESENTI, Bernard, F-39130 Clairvaux-les-Lacs (FR); MOREL, Armand, F-39130 Clairvaux-les-Lacs (FR)
(72) Inventeur: PESENTI, Bernard, F-39130 Clairvaux-les-Lacs (FR); MOREL, Armand, F-39130 Clairvaux-les-Lacs (FR)
(74) Mandataire: Lemoyne, Didier
(86) Numéro de dépôt international: FR9201110
(87) Numéro de publication internationale: WO9310658

(56) Documents cités:
- EP-A- 0 118 895
- CH-A- 470 948
- DE-A- 3 535 825
- FR-A- 1 469 748
- US-A- 3 356 113

## Description

La présente invention concerne une machine pour façonner un arbre sur pied, du type à avance hélicoïdale.

Dans la suite de ce mémoire, on entendra de manière très générale par "façonner" aussi bien l'action d'élaguer un arbre avec épargne de l'écorce, que celle d'ébrancher ledit arbre au ras du tronc et éventuellement de l'écorcer avant qu'il ne soit abattu.

L'invention trouve une application particulièrement avantageuse dans le domaine du façonnage des arbres résineux. Mais elle peut également être utilisée pour façonner des arbres feuillus dont les branches s'apparentent à la constitution des arbres résineux, ou façonner les arbres feuillus jusqu'à leur houppier.

Le façonnage d'un arbre, au sens d'ébranchage et d'écorçage éventuel, est habituellement effectué de la manière suivante. Un ouvrier, au moyen d'une scie à moteur, telle qu'une tronçonneuse, coupe les branches au ras du tronc le long de l'arbre. S'il doit l'écorcer, il utilise une écorceuse à moteur thermique ou, en période de sève, une hache ou un péloir. L'ouvrier est ensuite obligé de tourner l'arbre d'un demi-tour au moyen d'un tourne-bois ou d'un treuil mécanique afin d'ébrancher et écorcer la partie de l'arbre qui est en contact avec le sol. Enfin, il doit entasser les branches coupées qui se trouvent sur toute la longueur de l'arbre. Dans le cas où il faut débiter l'arbre en rondins, pour former par exemple des stères destinées à la fabrication de la pâte à papier, l'ouvrier doit mesurer tous les mètres en général, faire un repère, puis scier en billes à l'aide de sa tronçonneuse.

Ce travail de façonnage effectué manuellement présente un certain nombre d'inconvénients. Outre la fatigue éprouvée par l'ouvrier, il provoque la maladie dite de la "main blanche", due aux vibrations produites par les scies à chaîne. De plus, les outils utilisés, comme les tronçonneuses à moteur thermique, sont bruyants et concentrent les gaz d'échappement émis autour de l'ouvrier.

Aussi, a-t-on cherché à remplacer le façonnage manuel par un travail équivalent réalisé mécaniquement voire automatiquement. Il existe par exemple des machines appelées "abatteuses-ébrancheuses" qui sont montées directement sur un bras hydraulique fixé sur un tracteur. Ces machines pincent l'arbre, le sectionnent, l'ébranchent et le débitent en rondins. Ces engins sont d'un investissement lourd, nécessitent un camion pour le déplacement, et ne peuvent travailleur que sur terrain facile, plat et sec. La qualité du travail est médiocre en ébranchage et ces machines n'écorcent pas.

On connait dans l'état de la technique d'autres dispositifs qui sont des appareils de coupe automatique comprenant essentiellement une cage entourant le tronc de l'arbre à la manière d'un collier, et, sur cette cage, des roulettes qui la guident le long d'une ligne hélicoïdale sous l'action d'un moteur d'entraînement. Un outil coupant, du type fraise, sectionne les branches qui se trouvent sur sa course. Une telle machine de coupe automatique est décrite par exemple dans le brevet français n° 1469748. Cette machine connue présente toutefois l'inconvénient que, compte tenu de la conicité général des troncs d'arbres, le pas d'avance de l'outil de coupe sur la trajectoire hélicoïdale n'est pas constant puisqu'il dépend du diamètre du tronc. Il en résulte que le recouvrement de la largeur coupée par l'outil sur un tour d'hélice n'est pas optimal. Le brevet suisse n° 470 948 propose une machine du même genre dans laquelle le pas de l'hélice décrite par l'outil de coupe est constant à l'aide de roulettes inclinables sous l'action d'un système complexe de tiges articulées reliées au châssis de la machine.

Aussi, le problème technique à résoudre par l'objet de la présente invention est de proposer une machine pour façonner un arbre sur pied, du type à avance hélicoïdale, qui, selon un premier aspect, permettrait, dans une conception simple et peu coûteuse, d'assurer le maintien du pas de l'hélice à une valeur constante, déterminée par la hauteur de l'outil de coupe.

La solution au problème technique posé consiste, selon la présente invention, en ce que ladite machine comporte :
- un châssis comprenant au moins deux équerres, dites de montée, superposées le long d'un axe définissant la direction d'avance de la machine, lesdites équerres étant constituées de deux branches s'étendant à partir d'un sommet,
- une roue motrice,
- une pluralité de roues de guidage montées libres en rotation le long de chaque branche desdites équerres, les axes de rotation des roues de guidage présentant, dans le plan défini avec les branches homologues, une inclinaison avec l'axe du châssis diminuant du sommet vers l'extrémité de ladite branche, de manière à assurer un pas d'avance constant indépendamment des variations du diamètre du tronc de l'arbre à façonner.

Ainsi, au fur et à mesure de la progression de la machine sous l'action de la roue motrice, le tronc de l'arbre se trouve maintenu en appui sur une des roues de guidage de chaque branche dont la position se rapproche du sommet des équerres, c'est à dire dont l'inclinaison diminue de sorte à compenser la réduction du diamètre de tronc et ainsi maintenir le pas à une valeur prédéterminée en fonction de la hauteur de l'outil de coupe.

Dans un mode de réalisation particulier, mais non limitatif, ladite roue motrice présente un axe de rotation parallèle à l'axe du châssis et possède sur sa périphérie une pluralité de disques montés libres en rotation transversalement à la roue motrice et faisant radialement saillie.

La roue motrice a donc un effet d'entraînement perpendiculaire à la direction d'avance définie par l'axe du châssis. Les roues de guidage transforment l'action de ladite roue motrice en un mouvement hélicoïdal que la roue motrice elle-même peut suivre en toute liberté du fait de la présence des disques qui ont en fait la double fonction d'accrochage sur le tronc de la roue motrice dans son mouvement d'entraînement et de roulement de ladite roue motrice dans la direction d'avance.

Cette constitution originale de la roue motrice permet d'envisager des moyens de descente linéaire de la machine après que l'arbre ait été façonné. L'invention prévoit en particulier que le châssis comporte également au moins deux équerres, dites de descente, coulissantes vers l'intérieur dudit châssis par rapport aux équerres de montée, de manière à venir en appui contre le tronc de l'arbre à façonner et dégager lesdites équerres de montée du tronc de l'arbre après façonnage, l'une au moins des équerres de descente portant au moins un rouleau moteur de descente.

Lorsque la machine de l'invention est mise en configuration de descente, il ne sera pas nécessaire de dégager la roue motrice du tronc de l'arbre, celle-ci se contentera de rouler le long du tronc sans s'opposer au mouvement de descente grâce aux disques transversaux dont elle est munie.

Selon un autre aspect de l'invention, une machine pour façonner un arbre sur pied, du type à avance hélicoïdale, est remarquable en ce que ladite machine comporte :
- un châssis comprenant, d'une part, au moins deux équerres, dites de montée, superposées le long d'un axe définissant la direction d'avance de la machine, lesdites équerres étant constituées de deux branches s'étendant à partir d'un sommet, et, d'autre part, un bras articulé soumis à un ressort de rappel, destiné à maintenir les branches des équerres en appui contre le tronc de l'arbre à façonner,
- une roue motrice portée par ledit bras articulé, ladite roue motrice étant mue par un moteur, dit moteur d'avance, et l'ensemble constitué par la roue motrice et le moteur d'avance étant monté libre en rotation par rapport au bras articulé.

Cette disposition présente l'avantage d'éviter l'effet de contre-rotation du moteur d'avance qui pourrait se produire lorsque la progression de la roue motrice se trouve bloquée par un obstacle et qui aurait tendance à faire supporter au bras articulé l'effort de contre-réaction du moteur et de déstabiliser la machine pressée autour de l'arbre.

Afin d'arrêter dans ces conditions la rotation du moteur d'avance, l'invention prévoit que ledit moteur d'avance comporte un levier à l'extrémité duquel est fixée une roulette libre de contre-rotation qui vient s'appuyer contre le tronc de l'arbre et ainsi stopper le mouvement de contre-rotation du moteur et permettre la rotation de la roue motrice.

Enfin, on observe de manière générale dans les machines pour façonner un arbre sur pied connues qu'au lieu d'être coupées complètement et tombées sur le sol, certaines branches peuvent n'être coupées seulement en partie et donc pendre le long de l'arbre risquant d'entraver l'ascension de la machine. Pour remédier à cet inconvénient, une machine à façonner un arbre sur pied, du type à avance hélicoïdale, comporte, selon un troisième aspect de l'invention :
- un chassis présentant un axe définissant la direction d'avance de la machine,
- un ensemble de coupe supporté par ledit châssis, comprenant, au moins, un outil de façonnage,
- un moyen de détection de contact amont dudit outil de façonnage avec une branche à couper,
- un moyen d'évitement de ladite branche par coulissement de l'outil de façonnage parallèlement à l'axe du châssis.

Ainsi, les branches susceptibles d'être partiellement coupées, c'est à dire par la cime de l'outil de façonnage, ne le sont que le tour suivant et cette fois complètement.

Si l'arbre doit être débité en rondins, il est prévu que ledit ensemble de coupe comporte également un outil de billonnage du tronc de l'arbre après façonnage. Ledit outil de billonnage peut, avantageusement, être un chaîne de coupe, du type tronçonneuse, pivotante dans un plan perpendiculaire à l'axe du châssis.

La machine pour façonner un arbre sur pied, conforme à l'invention, se présente donc comme un appareil automatique offrant un rendement augmenté du fait de la possibilité d'utiliser plusieurs machines simultanément ou d'effectuer d'autres tâches pendant le fonctionnement de la machine.

L'outil de façonnage employé sur la machine de l'invention a une efficacité beaucoup plus élevé que la traditionnelle scie à chaîne, notamment il ébranchera et écorcera en une seule opération et n'utilisera pas d'huile de graissage. Il en résulte donc une économie d'énergie en carburant et en lubrifiant qui d'habitude est dispersé dans la forêt et constitue en pollution.

De plus, il est à noter que les branches à entasser se trouvent réparties autour du pied de l'arbre et non sur toute sa longueur, d'où une facilité de travail pour l'ouvrier. L'arbre ainsi dépourvu de ses branches, sauf la cime sera plus aisé à abattre. Une fois abattu, il suffira de couper la cime, et l'arbre sera terminé sans avoir à le tourner. Dans le cas d'un débitage en rondins, la machine coupera automatiquement tous les mètres une bille de bois au fur et à mesure de sa descente, alors que lors de l'ascension, la machine aura façonné l'arbre, ébranché et éventuellement écorcé. L'ouvrier bénéficie donc de bien meilleures conditions de travail.

La description qui va suivre en regard des dessins annexés, donnés à titre d'exemples non limitatifs, fera bien comprendre en quoi consiste l'invention et comment elle peut être réalisée.

La figure 1 est une vue d'ensemble en perspective d'une machine à façonner un arbre sur pied, conforme à l'invention.

La figure 2 est une vue de dessus correspondant à la vue d'ensemble de la figure 1.

La figure 3 est une vue de côté d'une rangée de roues de guidage le long d'une branche d'équerre du châssis de la machine montrée à la figure 1.

La figure 4a est une vue de dessus d'une roue motrice de la machine de la figure 1.

La figure 4b est une vue en coupe selon la ligne A-A de la figure 4a.

Les figures 5a et 5b sont des vues de dessus respectivement de l'équerre supérieure et de l'équerre inférieure du châssis de la machine de la figure 1 pendant la phase de montée.

Les figures 5c et 5d sont des vues de dessus respectivement de l'équerre supérieure et de l'équerre inférieure des figures 5a et 5b pendant la phase de descente de la machine de la figure 1.

La figure 6 est une vue de dessus d'un ensemble comprenant une roue motrice et un moteur de montée.

Les figures 7a à 7d sont des vues de dessus montrant la position de l'arbre dans le châssis de la machine de la figure 1 pour divers diamètres de tronc.

La figure 8 est une vue de côté d'un ensemble de coupe de la machine de la figure 1.

La figure 9a est une vue de dessus d'un outil de façonnage de l'ensemble de coupe de la figure 8, montrant des guides de profondeur de coupe.

La figure 9b est une vue de côté de l'outil de façonnage de la figure 9a.

Les figures 10a et 10b sont des vues de côté montrant l'action des guides de profondeur de coupe des figures 9a et 9b.

La figure 11 est une vue de côté d'un outil de façonnage, montrant une variante de réalisation des guides de profondeur de coupe.

Les figures 12a et 12b sont des vues de côté montrant l'action des guides de profondeur de coupe de la figure 11.

La figure 13 est une vue de côté d'une variante des moyens de détection de contact et d'évitement de l'ensemble de coupe de la machine de la figure 1.

La figure 14 est une vue de dessus de l'outil de billonnage de la machine de la figure 1.

La figure 15 est une vue de côté de l'outil de billonnage de la figure 14.

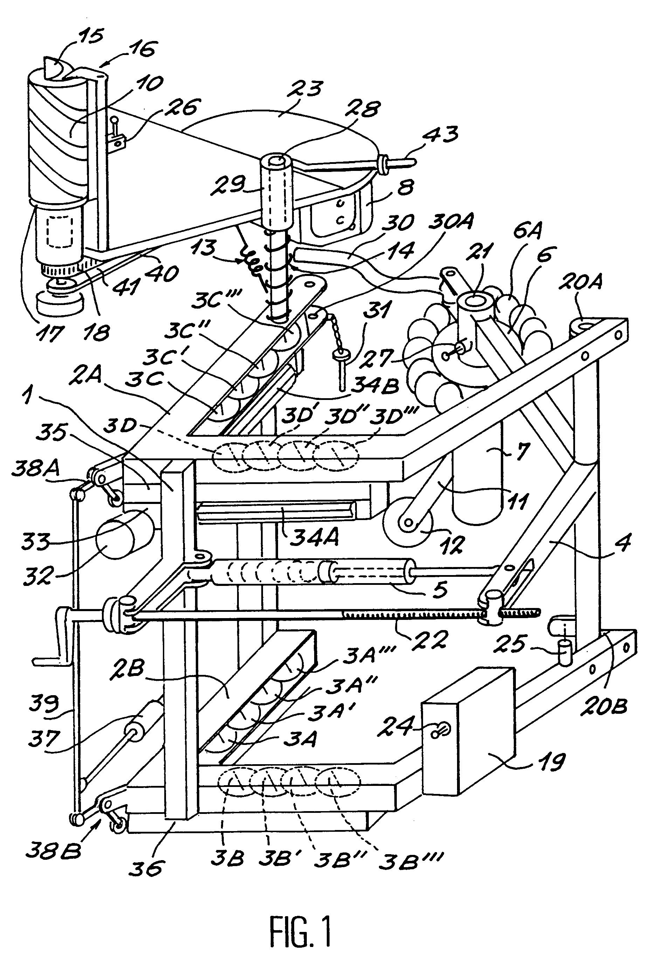

La figure 1 montre, en perspective, une machine pour façonner un arbre sur pied, du type à avance hélicoïdale. Cette machine comporte un châssis comprenant deux équerres 2A, 2B, que l'on désignera par équerres de montée, constituées essentiellement de deux branches s'étendant à partir d'un sommet. Lesdites équerres 2A, 2B sont superposées horizontalement le long d'un axe vertical, définissant la direction d'avance de la machine, et matérialisé sur la figure 1 par un tube 1 d'acier carré reliant les deux équerres 2A, 2B entre elles sensiblement au niveau de leur sommet.

A une première extrémité, les équerres 2A, 2B de montée sont reliées par un bras 4 articulé autour de deux paliers 20A, 20B à roulement à billes, et à une deuxième extrémité, lesdites équerres sont reliées par un autre tube d'acier carré.

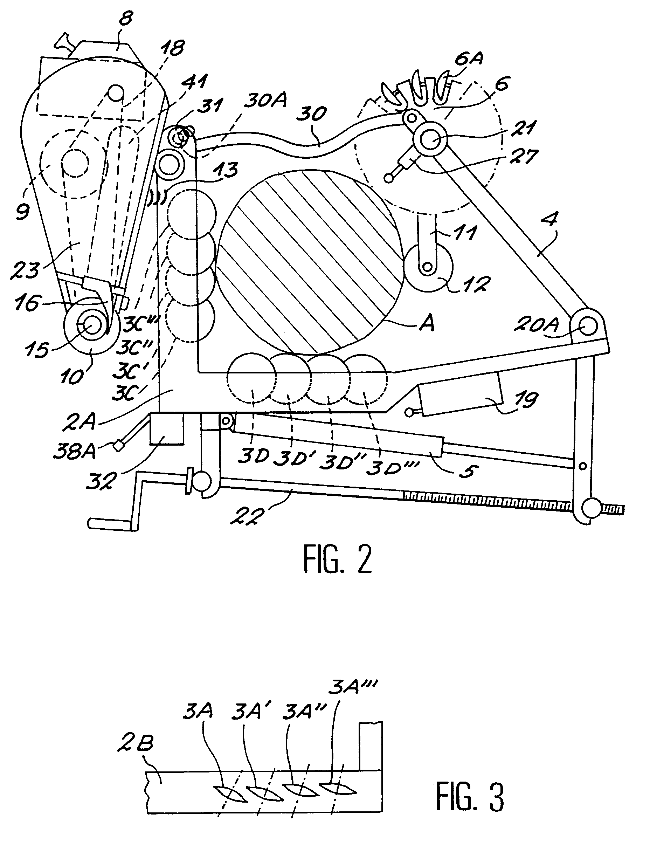

Ledit bras articulé 4 porte une roue motrice 6 et est soumis à l'action d'un ressort 5 de rappel, fixé entre le tube 1 et le bras 4, destiné, comme l'indique la figure 2, d'une part à maintenir les branches des équerres 2A, 2B de montée en appui contre le tronc de l'arbre A à façonner, et d'autre part, à presser la roue motrice 6 contre le tronc.

Un vérin 22 à vis, qui peut s'accrocher et se décrocher facilement du tube 1 et du bras articulé 4, permet de tendre le ressort 5 pour écarter la roue motrice 6 jusqu'à ce que l'on puisse engager la machine de l'invention autour de l'arbre. On détend ensuite le ressort 5 de rappel afin d'amener ladite roue motrice contre le tronc et fixer la machine à l'arbre.

Après quoi, on décroche le vérin 22 de façon à ce que là roue motrice 6 puisse être maintenue pressée contre le tronc durant la montée ou la descente de la machine, quel que soit la diamètre du tronc. Le façonnage terminé, on raccroche le vérin 22 pour tendre le ressort 5 et pouvoir dégager la machine et passer à l'arbre suivant.

On peut voir sur les figures 1 et 2 qu'une pluralité, ici de quatre roues de guidage, référencées 3A, 3A', 3A'', 3A''',...,3D, 3D', 3D'', 3D''', sont montées libres en rotation le long de chaque branche des équerres 2A, 2B qui peuvent être également en acier et présenter une section en U afin de pouvoir former logement pour lesdites roues de guidage.

Comme le montre plus particulièrement la figure 3, les axes de rotation des roues de guidage, telles que 3A, 3A', 3A'', 3A''' de l'équerre 2B, présentent dans le plan défini avec la branche homologue de l'équerre 2A, une inclinaison avec l'axe du châssis diminuant du sommet vers l'extrémité de ladite branche, de manière à assurer un pas d'avance constant indépendamment des variations du diamètre du tronc de l'arbre à façonner.

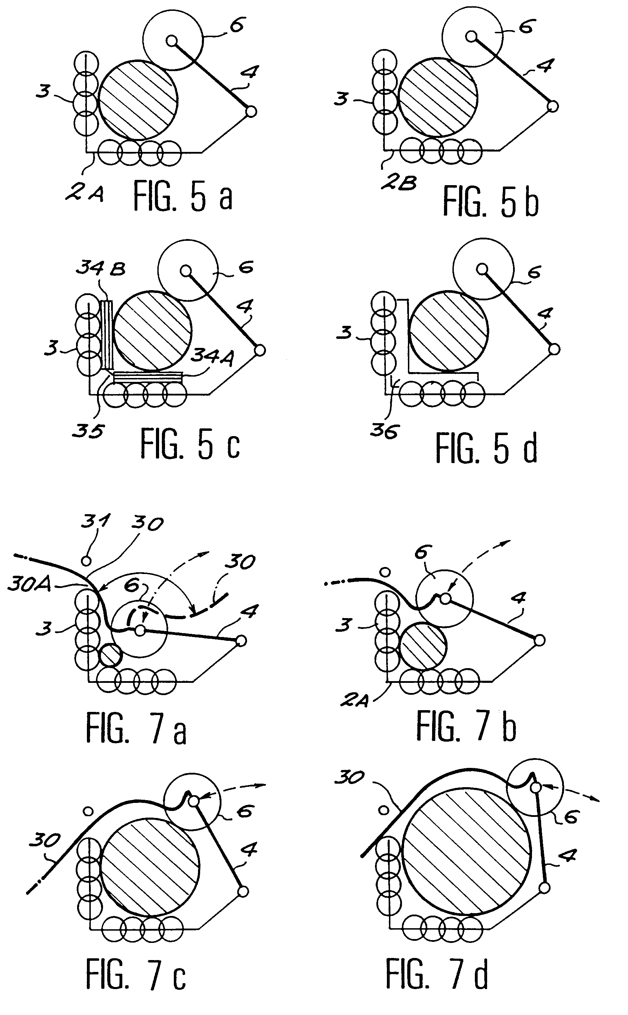

En relation avec la figure 2 notamment, on observe que sous l'action du bras articulé 4 et du ressort 5 de rappel, le tronc de l'arbre est en contact avec l'une des roues de guidage qui, du fait de son inclinaison, confère au châssis de la machine, objet de l'invention, un mouvement d'avance hélicoïdale autour de l'arbre. Le pas de cette hélice est déterminé par l'inclinaison de la roue de guidage en contact avec l'arbre et par le diamètre du tronc. On comprend alors que, pour maintenir ce pas constant, l'angle d'inclinaison doit être d'autant plus petit que le diamètre est plus grand. C'est ce que représentent les figures 7a à 7d sur lesquelles on peut observer que pour un tronc de petit diamètre (figure 7a) la roue de guidage en contact avec l'arbre est proche du sommet des équerres 2A, 2B de montée, et donc de forte inclinaison, tandis que lorsque le diamètre du tronc augmente (figure 7b à 7d), le contact avec l'arbre est réalisé sur les roues de guidage les plus éloignées de sommet dont l'inclinaison est plus faible.

Ce souci d'assurer un pas constant au mouvement hélicoïdal décrit par la machine selon l'invention est lié au fait que, lorsque ladite machine est munie d'un outil de façonnage de longueur déterminée, l'arbre doit être façonné sur une longueur de coupe correspondant au mieux à la longueur de l'outil de manière à obtenir le rendement maximum de la machine.

Dans le mode de réalisation représenté aux figures 1 et 2 en particulier, les roues de guidage sont lisses. Toutefois, il est bien entendu que, sans sortir du cadre de l'invention, elles pourraient tout aussi bien être crantées par exemple.

Les figures 1, 2, 4a et 4b montrent une roue motrice 6 remarquable en ce qu'elle présente un axe de rotation vertical, c'est à dire parallèle à l'axe du châssis, et possède sur sa périphérie une pluralité de disques 6A montés libres en rotation transversalement à ladite roue motrice et faisant radialement saillie. Ce sont ces disques, munis d'un sillon tranchant, qui viennent presser l'arbre et permettent l'entraînement de la machine sans entraver l'ascension en hélice imprimée par les roues de guidage inclinées disposées sur les équerres, car ils peuvent tourner sur eux-même en autorisant ainsi un déplacement vertical de la roue motrice 6.

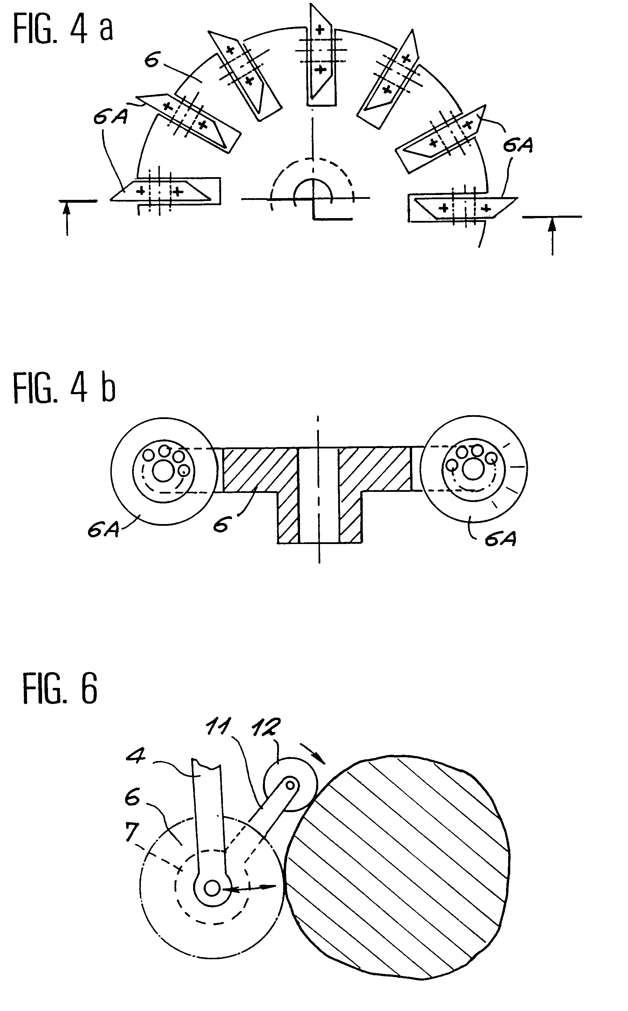

On peut observer sur les figures 4a et 4b que les disques 6A, en acier, sont montés sur roulements à billes autour de la roue 6, elle-même en acier.

De par sa conception, cette roue motrice 6 permet la descente de la machine conforme à l'invention le long de l'arbre. Pour cette opération, elle ne sera évidemment plus motrice.

Dans le but d'assurer cette fonction de descente, le châssis de la machine comporte également deux équerres 35, 36 de descente que l'on peut voir sur les figures 1, 5a à 5d. Chacune de ces équerres de descente coulisse vers l'intérieur du châssis par rapport à l'équerre de montée correspondante à l'aide par exemple, d'un vérin 37 qui actionne des leviers 38A, 38B par l'intermédiaire d'une tringle 39. Ainsi, les équerres 35, 36 peuvent venir en appui contre le tronc de l'arbre à façonner et dégager les équerres 2A, 2B de montée, comme le montrent les figures 5a à 5d.

L'équerre 36 de descente inférieure comporte deux branches lisses directement en contact avec l'arbre, tandis que l'équerre 35 de descente supérieure porte deux rouleaux 34A, 34B dentés, solidaires entre eux par un renvoi d'angle 33. Ces deux rouleaux sont rendus moteurs pour la descente par un motoréducteur électrique 32. La roue motrice 6 peut rester en place pendant toute la phase de descente verticale le long de l'arbre puisque, roulant sur le tronc grâce aux disques 6A, elle ne s'oppose pas au mouvement de descente.

Dans l'exemple de réalisation de la figure 1, la roue motrice 6 est mue par un moteur 7, dit moteur d'avance, qui peut être un motoréducteur électrique à courant continu, couplé coaxialement à la roue motrice 6. L'ensemble roue motrice 6 - moteur 7 d'avance est monté libre en rotation par rapport au bras articulé 4 grâce à un palier 21. Dans ces conditions, le moteur 7 d'avance a tendance à tourner dans le sens inverse de la roue motrice 6 qu'il entraîne. Afin d'arrêter cet effet de contre-rotation, il est prévu, comme l'indiquent les figures 1, 2 et 6, que le moteur 7 comporte un levier 11 à l'extrémité duquel est fixée une roulette libre 12 de contre-rotation qui vient en appui sur l'arbre, bloquant ainsi la contre-rotation du moteur 7 d'avance en permettant la rotation de la roue motrice 6. Avantageusement, la roulette libre 12 est en acier, tranchante sur sa périphérie et inclinée pour aider l'ascension en hélice de la machine de l'invention.

En référence aux figures 1, 2, 7a à 7d, on peut observer qu'une barre 30 de sécurité articulée à une extrémité au bras articulé 4 glisse librement dans un guide 30A fixe par rapport au châssis et verrouillé par une goupille 31. Cette disposition évite à la machine, objet de l'invention, d'échapper du tronc de l'arbre en cas d'anomalie de fonctionnement. Les figures 7a à 7d montrent comment se comporte la barre 30 de sécurité selon divers diamètres de l'arbre. Sur la figure 7a, la barre 30 de sécurité est représentée en trait pointillé en position déverrouillée et en trait plein en position verrouillée par la goupille 31. La barre 30 ne peut alors que glisser dans le guide 30A en fonction des variations du diamètre du tronc de l'arbre.

Le fonctionnement cinématique de la machine à façonner conforme à l'invention est alors le suivant.

Au pied de l'arbre à façonner, la machine est d'abord placée autour du tronc en déverrouillant la barre 30 de sécurité et en actionnant le vérin 22 contre l'effort du ressort 5 de rappel de manière à ouvrir le bras articulé 4. Une fois la machine en place, le vérin 22 est relâché, et le bras articulé 4 vient appliquer la roue motrice 6 contre le tronc. Simultanément, les équerres 2A, 2B de montée sont également amenées en appui contre le tronc par l'intermédiaire des roues de guidage les plus éloignées et les moins inclinées 3A''', 3B''', 3C''', 3D'''. La barre 30 de sécurité est refermée et verrouillée.

La machine est alors prête à fonctionner. Un interrupteur 24 met en route le moteur 7 d'avance par l'intermédiaire d'un boîtier 19 de commande. La machine entame son mouvement de montée hélicoïdale au cours de laquelle l'arbre est façonner à l'aide d'un ensemble de coupe qui sera décrit en détail plus loin. Au cours de la progression de la machine, le diamètre de tronc diminuant, l'arbre vient en contact avec des roues de guidage de plus en plus inclinées, situées plus près du sommet des équerres 2A, 2B de montée. Le maintien du pas de l'hélice à une valeur constante est ainsi assuré.

Lorsque la machine arrive à un diamètre minimum de tronc admissible, une butée fixée sur le bras articulé 4 appuiera sur un contact 25.

Si pour une raison quelconque, la machine se bloque, la roue motrice patinera sur l'arbre en le creusant jusqu'à ce qu'un contact 27 soit enclenché.

Si l'arbre est écimé, fourchu ou très tordu, un contact 26 le décèlera.

Les contacts 25, 26, 27 stoppent donc la montée de la machine sur l'arbre en arrêtant le moteur 7 d'avance.

Ensuite, le vérin électrique 37 pousse la tringle 39. Par l'intermédiaire des leviers 38A, 38B, les équerres 35, 36 de descente se substituent, grâce à des glissières, aux équerres 2A, 2B de montée. Puis le motoréducteur électrique 32 démarre et entraîne via le renvoi d'angle 33 les rouleaux dentés 34A, 34B provoquant ainsi la descente verticale de la machine. Un détecteur électronique placé dans le boîtier 19 de commande stoppe le motoréducteur 32, immobilisant la machine au bas de l'arbre.

Les figures 1, 2 et 8 notamment montrent une machine pour façonner un arbre sur pied comportant un ensemble de coupe supporté par le châssis de la machine et comprenant un outil 10 de façonnage. Dans le mode de réalisation présenté, ledit outil de façonnage est un outil cylindrique, rotatif autour d'un axe parallèle à l'axe du châssis et entrainé en rotation par un moteur thermique 8. Ce moteur thermique 8 entraîne également au moyen d'une courroie 18 un alternateur 9 qui charge une batterie située dans le boîter 19 de commande pour assurer en particulier le fonctionnement du moteur 7 d'avance, du motoréducteur 32 et du vérin électrique 37. La batterie permet en outre d'alimenter un microprocesseur logé dans le boitier 19 de commande.

Lorsque l'option billonnage est prévue, l'ensemble de coupe comporte un outil 40 de billonnage du tronc de l'arbre après façonnage qui, dans l'exemple de réalisation représenté aux figures 1, 2, 8, 14 et 15 est une chaîne 40 de coupe supportée par un plateau 41 pivotant dans un plan perpendiculaire à l'axe du châssis. La chaîne 40 est également entraînée par le moteur thermique 8.

L'ensemble de coupe constitué par le moteur thermique 8, l'alternateur 9, l'outil 10 de façonnage, la chaîne 40 et le plateau 41, est monté sur un support 23 réalisé en alliage d'aluminium, de manière à pouvoir pivoter autour d'un axe parallèle à l'axe du châssis par l'intermédiaire d'une douille 29 à billes ajustée dans le support 23 et d'un axe 28 fixé sur le chassis. Un ressort 13 de rappel presse cet ensemble en direction de l'arbre afin que l'outil 10 de façonnage vienne en appui contre l'arbre et épouse en permanence la surface du tronc quel qu'en soit le diamètre. Au fur et à mesure de l'ascension en hélice de la machine, l'outil 10 de façonnage vient usiner la surface de l'arbre en ébranchant et éventuellement en écorçant ce dernier. La chaîne 40 de coupe se trouve alors débrayée à l'aide d'un embrayage magnétique 44 alimenté par la batterie du boitier 19 de commande.

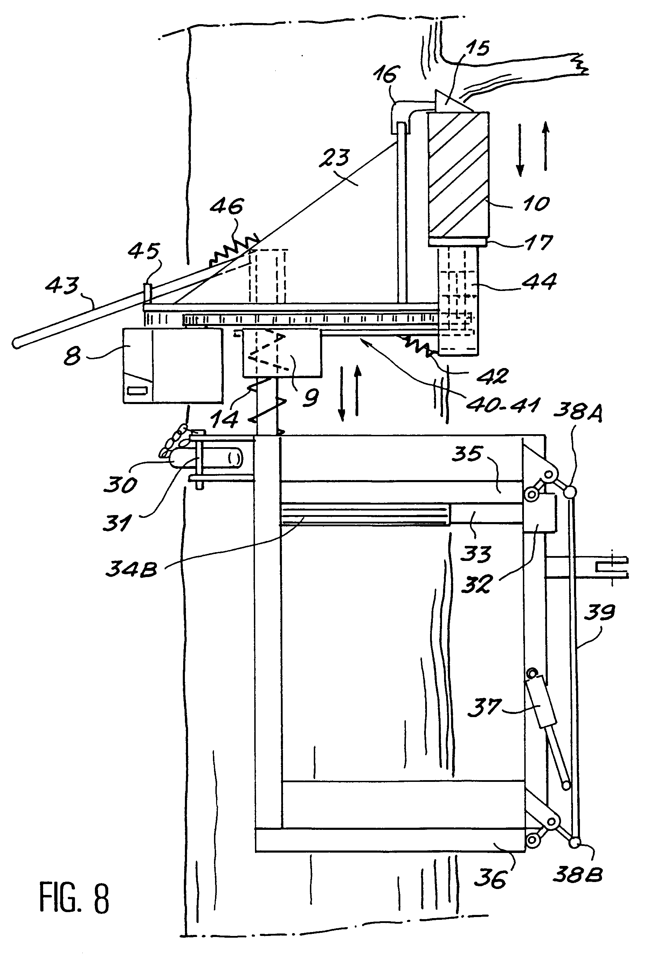

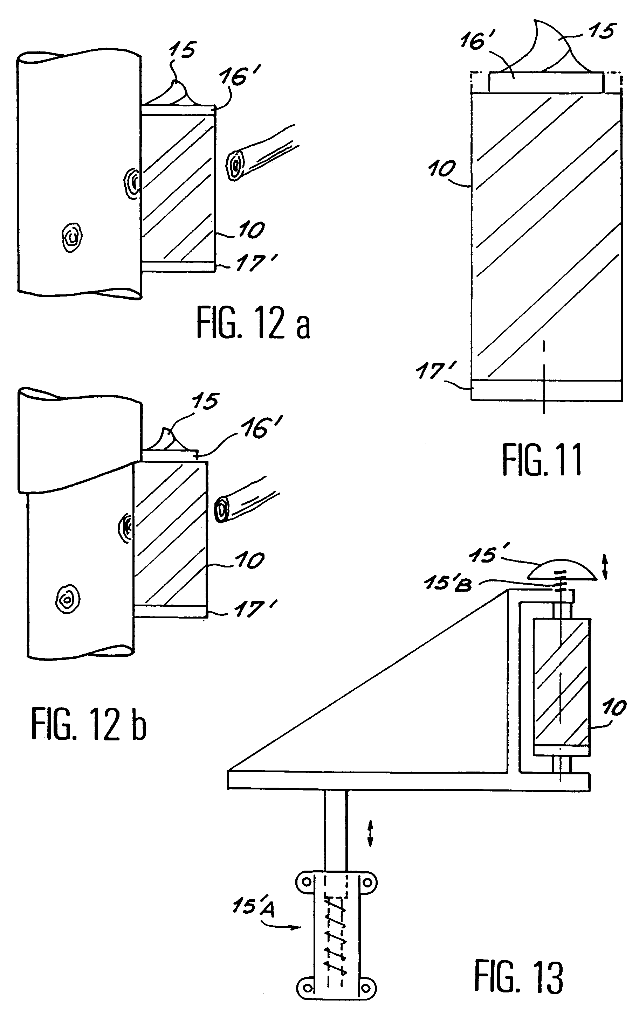

Sur les figures 8 et 13, l'ensemble de coupe est muni d'un moyen de détection de contact amont de l'outil 10 de façonnage avec une branche à couper et d'un moyen d'évitement de ladite branche par coulissement de l'outil de façonnage parallèlement à l'axe du chassis : ceci afin d'empêcher qu'une branche ne soit incomplètement coupée par la cime de l'outil de façonnage et pende le long de l'arbre avec le risque d'entraver la progression de la machine.

Dans le mode de réalisation de la figure 8, ledit moyen de détection amont et ledit moyen d'évitement sont constitués par une tête 15 non coupante, conique, en forme d'hélice d'un pas inverse à la rotation nominale de travail de l'outil 10 de façonnage. Au contact d'une branche, ladite tête 15 aura tendance à pousser l'outil vers le bas. Il suffit alors de monter l'ensemble de coupe libre en translation verticale sur une certaine hauteur par rapport au châssis, un ressort 14 de rappel maintenant cet ensemble en position haute pour qu'au contact d'une branche sur la tête 15 non coupante, l'ensemble de coupe s'abaisse et passe par dessous la branche. Sous l'action du ressort 14, l'ensemble reprend sa position une fois la branche passée et la coupe au passage suivant. Ce mouvement de translation verticale s'effectue grâce à la douille 29 et l'axe 28.

Selon la variante de réalisation de la figure 13, le moyen de détection de contact amont est constitué par un contacteur électrique 15' présentant une surface convexe et monté sur un moyen de rappel 15'B de façon à pouvoir passer de la position ouverte à la position fermée en coulissant verticalement sous l'action de la branche avec laquelle il vient en contact, et revenir en position ouverte après passage de la branche. Ce contacteur électrique 15' est prévu pour commander, au moment où il coulisse vers le bas, un moyen d'évitement constitué par un vérin électrique 15'A fixé verticalement sur le châssis et commandé par un moteur non représenté. Le vérin électrique 15'A a donc pour effet d'escamoter l'ensemble de coupe et plus particulièrement l'outil 10 de façonnage dès qu'un contact amont avec une branche est détecté par le contacteur électrique 15'.

Suivant que l'on veuille ébrancher ou ébrancher-écorcer, il sera nécessaire de régler la profondeur de l'outil 10 de façonnage : à ras de l'écorce pour l'ébranchage, en profondeur pour l'ébranchage-écorçage. Dans ce but, l'invention prévoit que ledit outil de façonnage comporte des guides de profondeur de coupe.

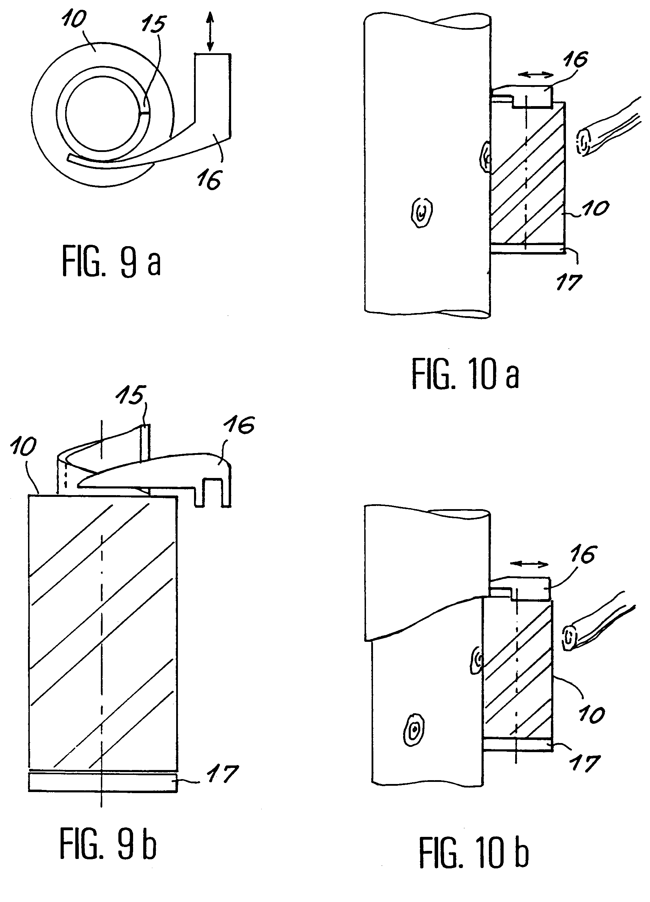

Dans un premier mode de réalisation représenté aux figures 9a et 9b, l'outil 10 de façonnage comporte un guide 16 de profondeur de coupe amont réglable, la plage de réglage étant comprise entre le diamètre de l'outil 10 et le diamètre de la base de la tête 15 non coupante dudit outil. Un second guide 17 de profondeur de coupe aval fixe est concentrique à l'outil 10 de façonnage et de même diamètre afin de ne pas pénétrer plus profond que le guide amont 16 ne l'a défini.

Les figures 10a et 10b illustrent deux fonctionnements différents de l'outil 10 de façonnage. Sur la figure 10a, le guide 16 de profondeur amont est réglé dans le même plan que le guide 17 de profondeur aval, et l'outil 10 ne fait que couper les branches. Sur la figure 10b, le guide amont 16 est réglé en retrait par rapport au guide aval 17, et l'outil 10 pénètre d'autant dans l'écorce et coupe les branches tout en écorçant.

Dans un deuxième mode de réalisation représenté à la figure 11, l'outil 10 de façonnage comporte un guide 16' de profondeur de coupe amont fixe qui peut d'ailleurs être intégré à la tête 15 non coupante de l'outil, et un guide 17' de profondeur de coupe aval fixe, situé à la base de l'outil et en faisant partie intégrante. Le guide aval 17' a un même diamètre que l'outil 10 de façonnage.

On voit sur la figure 12a que si le diamètre du guide amont 16' est égal à celui de l'outil 10, la machine ne fera qu'ébrancher l'arbre puisque l'outil travaille alors à fleur d'écorce. Si, par contre, le diamètre du guide aval 16' est inférieur à celui de l'outil 10 de façonnage, la figure 12b indique que la machine ébranchera et écorcera le tronc de l'arbre. Il suffit donc d'interchanger la tête de l'outil 10 selon qu'on veut ébrancher ou ébrancher-écorcer un lot de bois.

De manière à donner en toutes circonstances à la machine de l'invention une grande souplesse de fonctionnement, il est prévu des moyens d'asservissement électronique, gérés par le microprocesseur du boîtier 19 de commande, aptes, en cas de résistance importante appliquée à l'outil 10 de façonnage, à accélérer le moteur thermique 8 de façonnage et ralentir le moteur 7 d'avance de la machine.

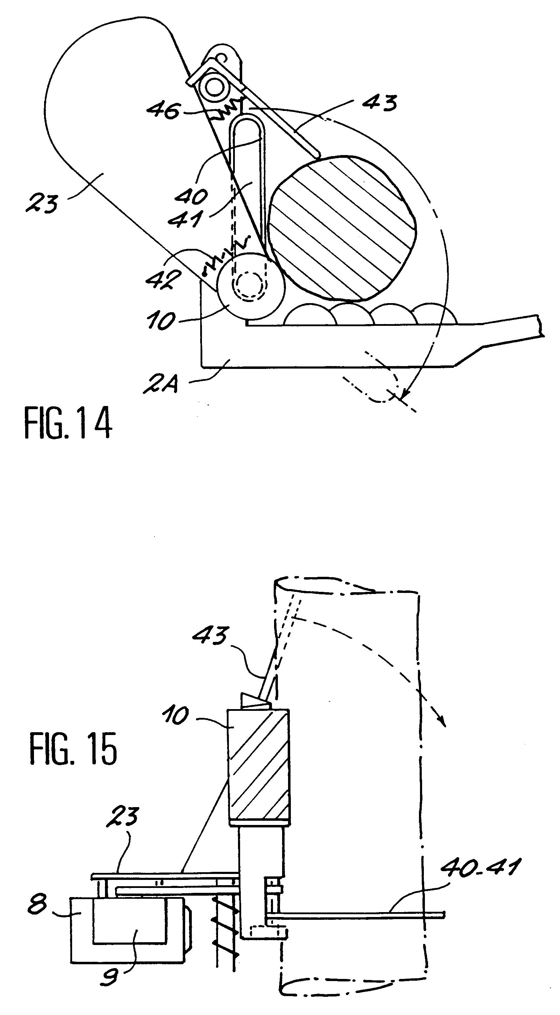

L'option billonnage en rondins lors de la descente après façonnage, fonction programmée avant l'ascension de la machine, se déroule de la manière suivante, en regard, des figures 14 et 15.

Lorsqu'elle arrive en haut de l'arbre après l'avoir façonné, la machine s'immobilise et passe sur les équerres 35, 36 de descente. Le moteur thermique 8 se ralentit sans caler, l'embrayage magnétique 44 débraye l'outil 10 de façonnage et embraye la chaîne 40 du type tronçonneuse. Dans le même temps, un verrou magnétique 45 alimenté par la batterie de la machine libère une tige 43 de poussée qui, sous l'action d'un ressort 46, maintiendra sous pression la bille à couper afin qu'elle ne coince pas la chaîne 40 lors du billonnage et que le billon soit toujours éjecté du même côté. Le moteur thermique 8 s'accélère, muni d'un embrayage contrifuge en sortie d'arbre moteur, et, par l'intermédiaire de la courroie 18, entraîne la chaîne 40 de coupe par un pignon concentrique à l'axe de l'outil 10 de façonnage.

Sous l'inertie de la rotation de la chaîne 40, le plateau 41 décrit un arc de cercle en direction de l'arbre et le billonnera. Lorsque le plateau 41 arrive en fin de course (position en pointillé sur la figure 14), le billon sectionné, poussé par la tige 43, basculera au sol. Le moteur thermique 8 se ralentira, stoppant la rotation de la chaîne 40, ce qui supprimera l'inertie donnée au plateau 41 qui reviendra à sa position de repos grâce à un ressort 42.

Lors du premier billonnage, c'est évidemment la cime de l'arbre qui est sectionnée. Ensuite la machine descend mètre par mètre en sectionnant à chaque fois une bille de bois.

Il faut noter que la bois de stère destiné à la pâte à papier se fait dans les petits bois et les cimes des arbres les plus gros. Dans cet exemple, la machine permet de façonner des arbres d'un diamètre de cinquante centimètres à la base jusqu'à douze centimètres en cime. Par contre, le bilonnage en stères s'effectuera à partir d'un diamètre minimum de douze centimètres jusqu'à un diamètre de vingt cinq centimètres. Au delà, la machine arrêtera sa fonction de billonnage et finira de descendre le long de l'arbre sans s'arrêter, moteur thermique 8 stoppé.

Toutes ces opérations effectuées automatiquement sont commandées par le microprocesseur de la machine qui, par cubage, fournira également le volume de bois façonnés au cours d'une journée par exemple.

Il est bien entendu que la machine de l'invention n'est pas limitée aux seuls exemples de réalisation décrits, l'homme de métier pouvant y apporter toutes les variantes à sa portée.

En particulier, on notera que la roue motrice peut être une roue lisse ou crantée, inclinée sur la direction d'avance. De même, l'outil de façonnage, dans une option élaguage, pourrait être une chaîne de coupe du type tronçonneuse dont le plateau serait disposé verticalement, parallèle à la direction d'avance.

## Revendications

1. Machine pour façonner un arbre sur pied, du type à avance hélicoïdale, caractérisée en ce que ladite machine comporte :
- un châssis comprenant au moins deux équerres (2A, 2B), dites de montée, superposées le long d'un axe définissant la direction d'avance de la machine, lesdites équerres (2A, 2B) étant constituées de deux branches s'étendant à partir d'un sommet,
- une roue motrice (6),
- une pluralité de roues (3A, 3A', 3A'', 3A''' ; 3B, 3B', 3B'', 3B''' ; 3C, 3C', 3C'', 3C'''; 3D, 3D', 3D'', 3D''') de guidage montées libres en rotation le long de chaque branche desdites équen'es (2A, 2B), les axes de rotation des roues de guidage présentant, dans le plan défini avec les branches homologues, une inclinaison avec l'axe du châssis diminuant du sommet vers l'extrémité de ladite branche, de manière à assurer un pas d'avance constant indépendamment des variations du diamètre du tronc de l'arbre à façonner.

2. Machine selon la revendication 1, caractérisée en ce que ladite roue motrice (6) présente un axe de rotation parallèle à l'axe du châssis et possède sur sa périphérie une pluralité de disques (6A) montés libres en rotation transversalement à la roue motrice (6) et faisant radialement saillie.

3. Machine selon l'une des revendications 1 ou 2, caractérisée en ce que le châssis comporte également au moins deux équen'es (35, 36), dites de descente, coulissantes vers l'intérieur dudit châssis par rapport aux équerres (2A, 2B) de montée, de manière à venir en appui contre le tronc de l'arbre à façonner et dégager lesdites équerres de montée du tronc de l'arbre après façonnage, l'une (35) au moins des équerres de descente portant au moins un rouleau moteur (34A, 34B) de descente.

4. Machine selon l'une quelconque des revendications 1 à 3, caractérisée en ce que le châssis comporte un bras articulé (4) soumis à un ressort (5) de rappel, destiné à maintenir les branches des équerres (2a, 2b) en appui contre le tronc de l'arbre à façonner.

5. Machine selon l'une quelconque des revendications 1 à 3 et selon la revendication 4, caractérisée en ce que la roue motrice (6) est portée par (7), dit moteur d'avance, et en ce que l'ensemble constitué par la roue motrice (6) et le moteur (7) d'avance est monté libre en rotation par rapport au bras articulé (4).

6. Machine selon la revendication 5, caractérisée en ce que le moteur (7) d'avance comporte un levier (11) à l'extrémité duquel est fixée une roulette libre (12) de contre-rotation.

7. Machine selon la revendication 6, caractérisée en ce que ladite roulette (12) de contre-rotation présente un axe de rotation incliné par rapport à l'axe du châssis.

8. Machine selon l'une quelconque des revendications 4 à 7, caractérisée en ce qu'une barre (30) de sécurité est articulée à une extrémité audit bras articulé (4) et glisse librement à travers un guide (30A) fixe par rapport au châssis.

9. Machine selon l'une quelconque des revendications 1 à 8, caractérisée en ce que ladite machine comporte :
- un ensemble de coupe supporté par le châssis, comprenant, au moins, un outil (10) de façonnage,
- un moyen (15, 15') de détection de contact amont dudit outil (10) de façonnage avec une branche à couper,
- un moyen (15, 15'A) d'évitement de ladite branche par coulissement de l'outil (10) de façonnage parallèlement à l'axe du châssis définissant la direction d'avance de la machine.

10. Machine selon la revendication 9, caractérisée en ce que l'outil (10) de façonnage étant un outil cylindrique rotatif autour d'un axe parallèle à l'axe du châssis définissant la direction d'avance de la machine, ledit moyen de détection de contact amont et ledit moyen d'évitement sont constitués par une tête (15) non coupante conique, en forme d'hélice d'un pas inverse à la rotation nominale de travail de l'outil (10) de façonnage.

11. Machine selon la revendication 9, caractérisée en ce que ledit moyen de détection de contact amont est constitué par un contacteur électrique (15'), et en ce que ledit moyen d'évitement est un vérin électrique (15'A) commandé par ledit contacteur électrique (15').

12. Machine selon l'une quelconque des revendications 9 à 11, caractérisée en ce que ledit outil (10) de façonnage comporte des guides (16, 17; 16', 17') de profondeur de coupe.

13. Machine selon la revendication 12, caractérisé en ce que l'outil (10) de façonnage comporte un guide (16') de profondeur de coupe amont fixe et un guide (17') de profondeur de coupe aval fixe faisant partie intégrante dudit outil (10) de façonnage.

14. Machine selon la revendication 12, caractérisée en ce que l'outil (10) de façonnage comporte un guide (16) de profondeur de coupe amont réglable et un guide (17) de profondeur de coupe aval fixe.

15. Machine selon l'une quelconque des revendications 9 à 14, caractérisée en ce que ledit ensemble de coupe est monté rotatif autour d'un axe parallèle à l'axe du châssis définissant la direction d'avance de la machine, et soumis à un ressort (13) de rappel destiné à appliquer ledit outil (10) de façonnage contre le tronc de l'arbre à façonner.

16. Machine selon l'une quelconque des revendications 9 à 15, caractérisée en ce que ledit ensemble de coupe comporte également un outil (40) de billonnage dit tronc de l'arbre après façonnage.

17. Machine selon la revendication 16, caractérisée en ce que ledit outil de billonnage est une chaîne (40) de coupe pivotante dans un plan perpendiculaire à l'axe dit châssis.

18. Machine selon l'une quelconque des revendications 9 à 17, caractérisée en ce qu'elle dispose de moyens d'asservissement aptes, en cas de résistance importante appliquée à l'outil (10) de façonnage, à accélérer le moteur (8) de façonnage et ralentir l'avance de la machine.

19. Machine selon l'une quelconque des revendications 1 à 18, caractérisée en qu'elle dispose d'un moyen de cubage apte à fournir le volume de bois façonnés.

## Claims

1. Helicoidally-movable type of machine for pruning standing trees, characterised in that said machine comprises:
- a frame comprising at least two brackets (2A, 2B) known as raising brackets, which are raised one above the other along an axis defining the forward moving direction of the machine, said brackets (2A, 2B) being constituted by two arms extending away from an apex, a drive wheel (6)
- a plurality of guide wheels (3A, 3A', 3A'', 3A''', 3B, 3B', 3B'', 3B''', 3C, 3C' , 3C'', 3C''', 3D, 3D', 3D'', 3D''') which are mounted so as to be rotationally free along each arm of said brackets (2A, 2B), and have rotational axes having, in the plane defined with the corresponding arms, an inclination relative to the frame axis that diminishes from the apex towards the end of the arm so as to obtain a forward motion increment that remains constant regardless of the variations in the trunk diameter of the tree to be pruned.

2. Machine according to claim 1, characterised in that said drive wheel (6) has an axis of rotation parallel to the frame axis and has, on its periphery, a plurality of disks (6A mounted so as to be rotationally free transversally to the drive wheel (6) and projecting radially.

3. Machine according to one of the claims 1 or 2, characterised in that the frame also comprises at least two brackets (35, 36), called lowering brackets, sliding towards the interior of said frame with respect to the raising brackets (2A, 2B) so as to rest against the trunk of the tree to be pruned and release said raising brackets from the tree trunk after pruning, at least one (35) of the lowering brackets bearing at least one lowering motor roller (34A, 34B).

4. Machine according to any of the claims 1 to 3, characterised in that the frame has a hinged arm (4) acted on by a drawback spring (5), designed to hold the arms of the brackets (2a, 2b) resting against the trunk of the tree to be pruned.

5. Machine according to any of the claims 1 to 3 and according to claim 4, characterised in that the drive wheel (6) is borne a motor (7) called a feed motor, and wherein the unit formed by the drive wheel (6) and the feed motor (7) is mounted so as to be rotationally free with respect to the hinged arm (4).

6. Machine according to claim 5, characterised in that the feed motor (7) has a lever (11) at the end of which there is fixed a counter-rotation freewheel (12).

7. Machine according to claim 6, characterised in that said counter-rotation wheel (12) has an axis of rotation inclined with respect to the axis of the frame.

8. Machine according to any of the claims 4 to 7, characterised in that a safety bar (30) is hinged at one end to said hinged arm (4) and slides freely through a guide (30A) that is fixed with respect to the frame.

9. Machine according to any of the claims 1 to 8, characterised in that said machine comprises.
- a cutting unit supported by the frame comprising at least one pruning tool (10),
- a means (15, 15') for the detection of the upline contact of said pruning tool (10) with a branch to be lopped,
- a means (15A, 15'A) for avoiding said branch by the sliding of the pruning tool (10) parallel to the axis of the frame defining the direction of forward motion of the machine.

10. Machine according to claim 9, characterised in that, the pruning tool (10) being a cylindrical tool rotating about an axis parallel to the axis of the frame defining the direction of forward motion of the machine, said means for the detection of upline contact and said avoidance means are constituted by a conical non-cutting head (15) helicoidally shaped with a thread in reverse to the nominal working rotation of the pruning tool (10).

11. Machine according to claim 9, characterised in that said upline contact detection means is constituted by an electrical contactor (15') and in that said avoidance means is an electric jack (15'A) controlled by said electrical contactor (15').

12. Machine according to any of the claims 9 to 11, characterised in that said pruning tool (10) comprises cutting depth guides (16, 17; 16', 17').

13. Machine according to claim 12, characterised in that the pruning tool (10) comprises a fixed upline cutting depth guide (16') and a fixed downline cutting depth guide (17') forming an integral part of said pruning tool (10).

14. Machine according to claim 12, characterised in that the pruning tool (10) comprises an adjustable upline cutting depth guide (16) and a fixed downline cutting depth guide (17').

15. Machine according to any of the claims 9 to 14, characterised in that said cutting unit is mounted rotationally about an axis parallel to the axis of the frame defining the direction of forward motion of the machine and acted on by a drawback spring (13) designed to apply said pruning tool (10) against the trunk of the tree to be pruned.

16. Machine according any of the claims 9 to 15, characterised in that said cutting unit also comprises a tool (40) for sawing the tree trunk into balks after pruning.

17. Machine according to claim 16, characterised in that said balk-sawing tool is a cutting chain (40) pivoting in an axis perpendicular to the axis of the frame.

18. Machine according to any of the claims 9 to 17, characterised in that it has servo-control means that are capable, in the event of major resistance applied to the pruning tool (10), of accelerating the pruning motor (8) and slowing down the forward motion of the machine.

19. Machine according to any of the claims 1 to 18, characterised in that it has a means for determining cubic content capable of giving the volume of wood that has been worked.

## Patentansprüche

1. Vorrichtung zum Bearbeiten eines stehenden Baums mit spiralförmigem Vorschub, gekennzeichnet durch:
- ein Gestell mit zumindest zwei Steigwinkeln (2A, 2B), die entlang einer die Vorschubrichtung des Gestells festlegenden Achse übereinanderliegend angeordnet sind, wobei die Steigwinkel (2A, 2B) aus zwei Abschnitten bestehen, die sich von einer Spitze ausgehend erstrecken,
- ein Antriebsrad (6), und
- eine Vielzahl von Führungsrädern (3A, 3A', 3A'', 3A'''; 3B, 3B', 3B'', 3B'''; 3C, 3C', 3C'', 3C'''; 3D, 3D', 3D'', 3D'''), die frei drehbar entlang jedes Abschnitts der Winkel (2A, 2B) angebracht sind, wobei die Drehachsen der Führungsräder in der durch die homologen Abschnitte festgelegten Ebene eine Neigung bezüglich der Achse des Gestells aufweisen, die von der Spitze zum Ende des Abschnitts hin abnimmt, um unabhängig von dem Durchmesser des zu bearbeitenden Baumstamms einen in Vorwärtsrichtung konstanten Vorschub zu gewährleisten.

2. Vorrichtung nach Anspruch 1, dadurch gekennzeichnet, daß das Antriebsrad (6) eine zu der Achse des Gestells parallele Drehachse und an seinem Umfang eine Vielzahl von transversal zu dem Antriebsrad frei drehbar angebrachten und radial hervorstehend ausgebildeten Scheiben (6A) aufweist.

3. Vorrichtung nach einem der Ansprüche 1 oder 2, dadurch gekennzeichnet, daß das Gestell außerdem zumindest zwei Absteigwinkel (35, 36) umfaßt, die bezüglich der Steigwinkel (2A, 2B) zum Inneren des Gestells hin verschiebbar sind, um nach der Bearbeitung gegen den Stamm des zu bearbeitenden Baums in Anlage zu kommen und die Steigwinkel von dem Baumstamm abzuheben, wobei zumindest einer (35) der Absteigwinkel zumindest eine Antriebsrolle (34A, 34B) für den Abstieg trägt.

4. Vorrichtung nach einem der Ansprüche 1 bis 3, dadurch gekennzeichnet, daß das Gestell einen von einer Zugfeder (5) beaufschlagten schwenkbaren Arm (4) umfaßt, der dazu dient, die Abschnitte der Winkel (2A, 2B) in Anlage gegen den Stamm des zu bearbeitenden Baums zu halten.

5. Vorrichtung nach einem der Ansprüche 1 bis 3 oder 4, dadurch gekennzeichnet, daß das Antriebsrad durch einen Vorschubmotor (7) getragen wird, und daß die durch das Antriebsrad (6) und den Vorschubmotor (7) gebildete Konstruktion bezüglich des schwenkbaren Arms (4) frei drehbar angebracht ist.

6. Vorrichtung nach Anspruch 5, dadurch gekennzeichnet, daß der Vorschubmotor (7) einen Hebel (11) umfaßt, an dessen Ende ein freies, kleines Rad (12) zur Gegendrehung befestigt ist.

7. Vorrichtung nach Anspruch 6, dadurch gekennzeichnet, daß das kleine Rad (12) zur Gegendrehung eine bezüglich der Achse des Gestells geneigte Drehachse aufweist.

8. Vorrichtung nach einem der Ansprüche 4 bis 7, dadurch gekennzeichnet, daß eine Sicherheitsstange (30) an einem Ende an dem schwenkbaren Arm (4) angelenkt ist und frei durch eine bezüglich des Gestells feststehende Führung (30A) hindurch gleitet.

9. Vorrichtung nach einem der Ansprüche 1 bis 8, gekennzeichnet durch:
- eine von dem Gestell getragene Schneidkonstruktion, die zumindest ein Bearbeitungswerkzeug (10) umfaßt,
- eine Einrichtung (15, 15') zur Erfassung eines Kontakts mit einem zu schneidenden Abschnitt oberhalb des Bearbeitungswerkzeugs, und
- eine Einrichtung (15, 15'A) zum Aussparen des Abschnitts durch Verfahren des Bearbeitungswerkzeugs (10) parallel zu der die Vorschubrichtung der Vorrichtung festlegenden Achse des Gestells.

10. Vorrichtung nach Anspruch 9, dadurch gekennzeichnet, daß dann, wenn das Bearbeitungswerkzeug ein um eine zu der die Vorschubrichtung der Vorrichtung festlegenden Achse des Gestells parallele Achse drehbares zylinderförmiges Werkzeug ist, die Einrichtung zur Erfassung des Kontakts oberhalb und die Einrichtung zum Aussparen aus einem nicht schneidenden, konusförmigen Kopf (15) in Form eine Schnecke mit einer zu der Nenn-Arbeitsdrehung des Bearbeitungswerkzeugs (10) reziproken Steigung besteht.

11. Vorrichtung nach Anspruch 9, dadurch gekennzeichnet, daß die Einrichtung zur Erfassung des Kontakts oberhalb aus einem elektrischen Arbeitskontakt (15') besteht, und daß die Einrichtung zum Aussparen ein durch den elektrischen Arbeitskontakt (15') gesteuertes elektrisches Stellglied (15'A) ist.

12. Vorrichtung nach einem der Ansprüche 9 bis 11, dadurch gekennzeichnet, daß das Bearbeitungswerkzeug (10) Führungen (16, 17; 16', 17') für die Schnittiefe umfaßt.

13. Vorrichtung nach Anspruch 12, dadurch gekennzeichnet, daß das Bearbeitungswerkzeug eine obere, feststehende Führung (16') für die Schnittiefe und eine untere, feststehende Führung (17') für die Schnittiefe aufweist, die Bestandteil des Bearbeitungswerkzeugs (10) sind.

14. Vorrichtung nach Anspruch 12, dadurch gekennzeichnet, daß das Bearbeitungswerkzeug (10) eine obere, einstellbare Führung (16) für die Schnittiefe und eine untere, feststehende Führung (17) für die Schnittiefe aufweist.

15. Vorrichtung nach einem der Ansprüche 9 bis 14, dadurch gekennzeichnet, daß die Schneidkonstruktion um eine zu der die Vorschubrichtung der Vorrichtung festlegenden Achse parallele Achse drehbar angebracht und von einer Zugfeder (13), die dazu dient, das Bearbeitungswerkzeug (10) gegen den Stamm des zu bearbeitenden Baums in Anlage zu bringen, beaufschlagt wird.

16. Vorrichtung nach einem der Ansprüche 9 bis 15, dadurch gekennzeichnet, daß die Schneidkonstruktion außerdem ein Werkzeug (40) zum Zerteilen des Baumstamms nach der Bearbeitung umfaßt.

17. Vorrichtung nach Anspruch 16, dadurch gekennzeichnet, daß das Werkzeug zum Zerteilen eine in einer zu der Achse des Gestells senkrechten Ebene schwenkbare Schneidkette (40) ist.

18. Vorrichtung nach einem der Ansprüche 9 bis 17, gekennzeichnet durch eine Regeleinrichtung, die in der Lage ist, bei Auftreten eines großen auf das Bearbeitungswerkzeug (10) einwirkenden Widerstands den Bearbeitungsmotor (8) zu beschleunigen und den Vorschub der Vorrichtung zu verlangsamen.

19. Vorrichtung nach einem der Ansprüche 1 bis 18, gekennzeichnet durch eine Kubatureinrichtung, die in der Lage ist, das Volumen verarbeiteten Holzes zu liefern.
